# EUROPEAN PATENT SPECIFICATION

(11) **EP 4 246 535 B1**
(45) Date of publication and mention of the grant of the patent: **25.06.2025**
(21) Application number: 23162304.2
(22) Date of filing: 16.03.2023
(51) Int. Cl.: G21F 5/12

(54) **CONTAINER FOR THE CONDITIONING, STORAGE AND DISPOSAL OF RADIOACTIVE WASTE**
BEHÄLTER ZUR KONDITIONIERUNG, LAGERUNG UND ENTSORGUNG VON RADIOAKTIVEN ABFÄLLEN
CONTENEUR POUR LE CONDITIONNEMENT, LE STOCKAGE ET L'ÉLIMINATION DE DÉCHETS RADIOACTIFS

(30) Priority: 16.03.2022 IT 202200005159
(43) Date of publication of application: 20.09.2023
(73) Proprietor: Ansaldo Nucleare S.p.A., 16152 Genova (IT)
(72) Inventor: COLTELLA, Thomas, 16152 GENOVA (IT)
(74) Representative: Studio Torta S.p.A.

(56) References cited:
- EP-A1- 1 047 082
- US-A- 4 445 042
- US-A- 4 447 733

## Description

### TECHNICAL FIELD

The present invention relates to a cask for conditioning, storage and disposal of radioactive waste, in particular solid radioactive waste of medium activity.

In more detail, the present invention fits into the context of the cylindrical casks intended for conditioning, storage and disposal of solid radioactive waste of medium activity with reduced Alpha-emitting radionuclide (MA-Beta) content. It is understood that the cask of the invention is suitable for use in the conditioning, storage and disposal of other types of waste.

### BACKGROUND

It is known that the casks for conditioning, storage and disposal of solid waste of medium activity have to meet stringent requirements, generally set by national or international standards which, albeit with some differences, establish substantially equivalent criteria. For Italy, the reference standard is UNI 11784:2020.

Among the casks available to date, cylindrical casks made of suitable metal materials, e.g. made by casting spheroidal cast iron or forging carbon steel, are particularly well known.

In general, the casks of this type consist of a main body provided with an access opening, and of a lid closing the opening of the body and fixed to the body by screws. A sealing system is placed between the body and the lid, which according to standards (such as the already mentioned Italian standard UNI 11784:2020) must consist of two gaskets in series.

The known casks, although generally efficient, may have some drawbacks in certain cases and still seem to have room for improvement.

In particular, some known casks are provided with sealing systems with combined axial and radial gaskets, which besides being relatively complicated and costly to manufacture and install, may in some cases not be entirely satisfactory in use.

In general, the known casks have recesses, defined for example by the seats formed in the lid and into which the lid closing screws are recessed, and by the heads of the screws themselves, which are normally cylindrical with a hexagonal socket. The presence of recesses poses problems during the usual operations of decontamination of the cask, as washing liquid and contaminated particulate matter can stagnate there or enter into the gaps left between the seats of the bolted connections.

Even the lid itself, if it is in turn recessed between the sides of the main body of the cask, creates an additional closed recess, a potential source of water stagnations or contaminated particulate matter, especially in the case wherein, as is often the case, the cask is filled under a water head and subsequently drained, dried and decontaminated.

An example of the above-mentioned kind of casks is disclosed by US4445042A.

### SUMMARY

It is an aim of the present invention to provide a cask for conditioning, storage and disposal of radioactive waste, in particular solid radioactive waste of medium activity, which is free of the drawbacks highlighted herein of the prior art.

In particular, it is an aim of the invention to provide a cask that is simple, inexpensive to make and use, and at the same time fully efficient.

It is a particular aim of the invention to provide a cask that is fully efficient in the sealing function and capable of effectively protecting the sealing system, for example in case of accidental events such as shocks and/or fires and which at the same time allows to simplify decontamination operations.

A further aim of the invention is to improve the sealing function not only of the primary sealing system (operating between the lid and the body of the cask) but also of the secondary sealing systems (operating on openings formed in the lid and in the body of the cask for draining, venting and the internal pressure and leakage checks during operation).

In accordance with these aims, the present invention relates to a cask for conditioning, storage and disposal of radioactive waste, in particular solid radioactive waste of medium activity, as defined in essential terms in the appended claim 1 and, in its additional characters, in the dependent claims.

The cask of the invention is fully effective in its functions, meeting in particular the requirements of the UNI 11784:2020 standard, while at the same time being particularly simple and inexpensive to make and use.

The cask of the invention enables in particular a simplification of the assembly and commissioning operations, allowing, among other things, the required performance of the main sealing system to be maintained for each design condition, whether it is normal, abnormal or incidental.

In accordance with the invention, in fact, the primary sealing system (acting between lid and body of the cask) consists of two axial gaskets in series, which are coplanar and tightened in a coaxial direction to the (cylindrical) body of the cask, guaranteeing sealing performance under all design conditions; this results in a significant saving in manufacturing costs compared to other solutions and at the same time high sealing efficiency.

In addition, the gaskets of the primary sealing system are protected against accidental events and therefore maintain their sealing efficiency even in the event of accidents (shocks and fires). In fact, the conical coupling surfaces are coupled to each other with a play less than the play existing between each lid closing screw and the respective through hole formed in the lid, thus ensuring the protection of the lid closing screws in the event of shocks. The gap between the radially outer portions of the flanges, on which the lid closing screws are placed, makes it possible to compensate, in the event of fire, for any differential thermal expansion and consequent tension and deformation states.

According to further aspects of the invention, which are the subject-matter of the dependent claims, the cask of the invention also has further features that allow to optimise the decontaminability of the outer surfaces of the cask, avoiding possible stagnations of liquids or solid particles. In particular, the lid closing screws are recessed in seats provided with radial outflow openings.

According to a further aspect of the invention, the so-called secondary sealing systems, acting on auxiliary openings formed on the body and on the lid of the cask, are also particularly simple and effective, as they consist of metal sealing rings, for example of C-Ring type, used together with threaded caps, in particular conical thread caps (NPT caps) treated with a solid lubricant and anti-seize paste that acts as a gas-tight sealing material. In this way, a significant saving in mechanical machining costs is achieved; in fact, the housing of an NPT cap is in fact definitely simpler and less costly than the construction of a seat for a second metal sealing ring, with the associated surface roughnesses, dimensional and geometric tolerances. In addition, commercially available NPT caps made of galvanised carbon steel can be used, which are definitely cheaper than custom-made sealing rings of C-Ring type made of high-grade Nickel alloys (e.g. Alloy 718) coated with Silver on the surface.

### BRIEF DESCRIPTION OF THE DRAWINGS

Further features and advantages of the present invention will become clear from the description of the following non-limiting embodiments, with reference to the figures of the accompanying drawings, wherein:
- Figure 1 is a perspective view of a cask for conditioning, storage and disposal of radioactive waste in accordance with the invention;
- Figure 2 is a longitudinal sectional view of the cask of Figure 1;
- Figure 3 shows in enlarged scale and in perspective view and with parts removed for clarity's sake a detail of Figure 2;
- Figure 4 shows, in an enlarged scale, a detail of Figure 3;
- Figure 5 shows, in an enlarged scale, a detail of Figure 2;
- Figure 6 shows in enlarged scale and in perspective view a further detail of Figure 2;
- Figure 7 is a sectional and perspective view of another detail in enlarged scale of the cask of Figure 1;
- Figure 8 shows in enlarged scale and in perspective view a variant of the detail of Figure 6;
- Figure 9 is a view in enlarged scale of the detail of Figure 8.

### DESCRIPTION OF EMBODIMENTS

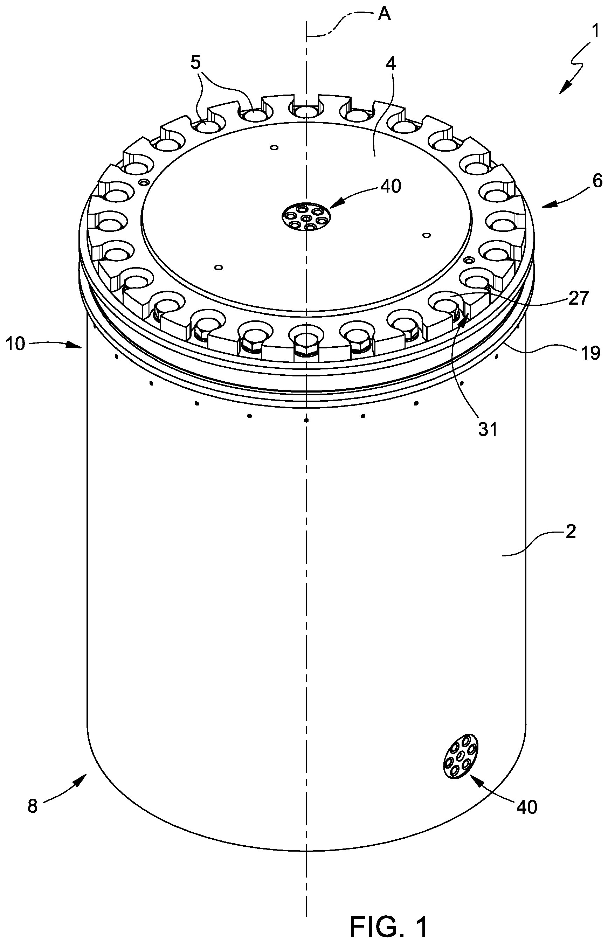

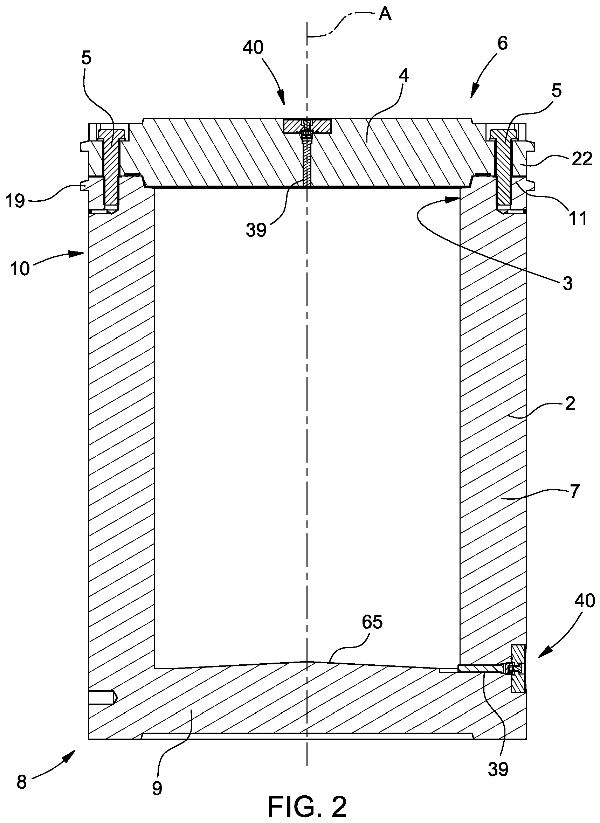

In Figures 1 and 2, 1 denotes as a whole a cask for conditioning, storage and disposal of radioactive waste, in particular solid radioactive waste of medium activity.

The cask 1 comprises: a main hollow body 2, e.g. cylindrical, extending along and about a longitudinal axis A and provided with an access opening 3; a lid 4, e.g. with circular plan, closing the opening 3 and fixed to the body 2 by closing screws 5; and a primary sealing system 6 arranged between the lid 4 and the body 2.

The body 2 is in particular a cylindrical body having a cylindrical side wall 7 that extends along and about the axis A between a lower end 8, closed by a bottom wall 9, and an upper end 10, provided with the opening 3.

The body 2 has, at the upper end 10, a flange 11 that extends about the opening 3 and cooperates with the lid 4 to close the opening 3.

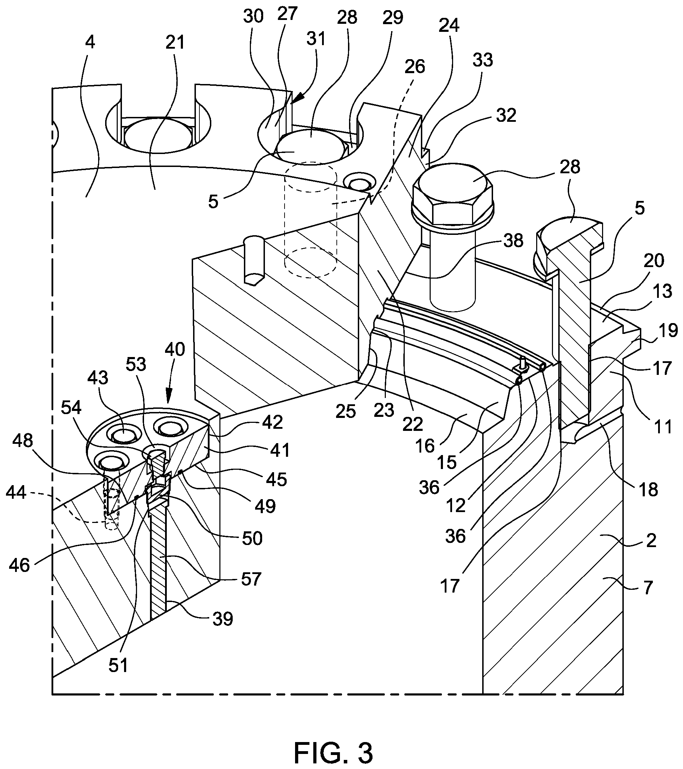

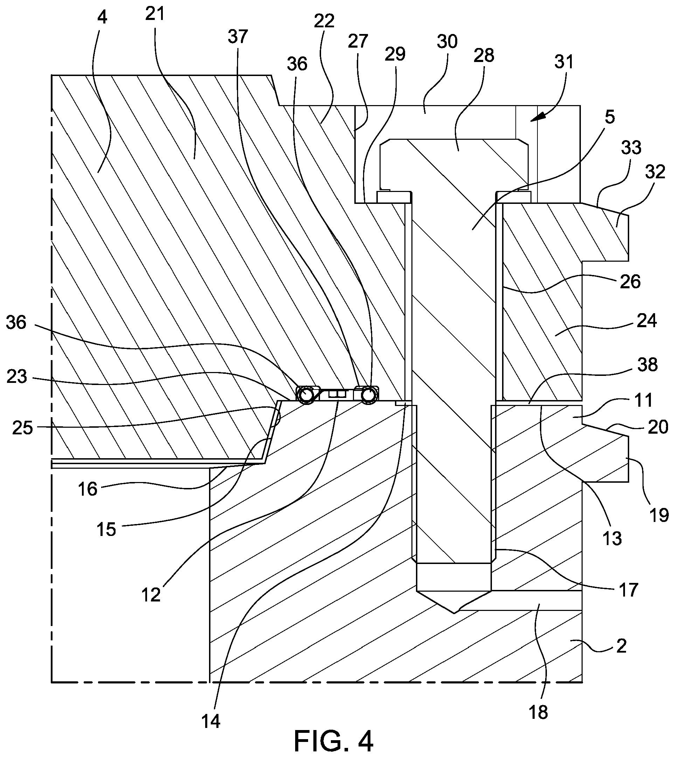

with reference also to Figures 3 and 4, the flange 11 has an annular sealing surface 12 substantially flat and perpendicular to the axis A and a radially outer portion 13 that is axially offset with respect to the sealing surface 12, joined to the sealing surface 12 by a step 14.

The body 2 also has a conical coupling surface 15 that extends from a radially inner edge of the sealing surface 12 towards the axis A and towards the lower end 8; and optionally (but not necessarily) an annular outflow surface 16 that extends from the sealing surface 12 towards the axis A and is slightly inclined downwards, i.e. towards the lower end 8.

The portion 13 of the flange 11 is provided with a plurality of threaded blind holes 17, parallel to the axis A and arranged angularly spaced about the axis A to receive respective closing screws 5.

Each hole 17 is connected to a drainage hole 18, formed radially through the side wall 7 at one bottom end of the respective hole 17 and communicating with the outside of the cask 1.

The body 2 also comprises a lifting bead 19 that protrudes radially from the side wall 7 of the body 2 around the flange 11 and can be grasped by special lifting devices for manoeuvring the cask 1. Advantageously, the bead 19 has an upper outflow surface 20 inclined downwards (i.e. towards the lower end 8) with respect to the axis A and to the side wall 7.

The lid 4 has a central portion 21 and a radially outer flange 22, facing the flange 11 of the body 2.

Specifically, the flange 22 comprises a sealing surface 23 cooperating with the sealing surface 12 of the body 2; and a radially outer portion 24 facing the portion 13 of the flange 11 of the body 2.

The sealing surfaces 12, 23 are parallel to one another and perpendicular to the axis A.

The central portion 21 has a conical coupling surface 25 adjacent to the sealing surface 23; the coupling surface 25 is defined by a side surface of the central portion 21 inclined towards the axis A and towards the lower end 8 and has a shape corresponding to the coupling surface 15 of the body 2.

Portion 24 has a plurality of through holes 26 aligned to respective holes 17 of the body 2 to receive the closing screws 5.

Each hole 26 comprises an enlarged upper portion 27 shaped to house a head 28 of the respective closing screw 5. The portion 27 has an annular bottom surface 29 from which a side wall 30 extends which surrounds the head 28 of the closing screw 5 but has a radial opening 31 facing toward a radially outer peripheral edge of the lid 4 and flush with the bottom surface 29.

The lid 4 also comprises a lifting bead 32 that protrudes radially from the side wall 30 of the lid 4 around the flange 22 and can be grasped by special lifting devices. Advantageously, the bead 32 has an upper outflow surface 33 located flush with the bottom surface 29 and inclined downwards (i.e. towards the lower end 8) with respect to the axis A.

The sealing system 6 comprises two gaskets 36 in series acting between the sealing surfaces 12, 23.

In particular, the gaskets 36 are axial gaskets acting parallel to the axis A between the sealing surfaces 12, 23, which are parallel to one another and perpendicular to the axis A.

The gaskets 36 consist of respective metal sealing rings, for example metal O-rings or, preferably, energized metal C-Rings.

For example, the gaskets 36 are housed in respective grooves 37 formed on one of the sealing surfaces 12, 23 and protrude axially out of the grooves 37 to contact the opposite sealing surface 12, 23. Preferably, the grooves 37 are formed on the sealing surface 23 of the lid 4 to prevent the gaskets 36 from being damaged when loading the waste into the cask 1.

Appropriately, the gaskets 36 are fixed to the lid 4 and held in the respective grooves 37 by means of clips screwed into special recesses within the grooves 37.

When the lid 4 is mounted on the body 2 and fixed to it by closing screws 5, the closing screws 5 are inserted through respective holes 26 and engage respective holes 17 to tighten the flanges 11, 22 against each other.

Preferably, the closing screws 5 are hexagonal head screws, for example (but not necessarily) made of galvanised steel. This avoids the presence of a recessed hexagon, a potential site for stagnations and contaminated particulate matter, and screws supplied in a hot-dip galvanised state can be used, which are more resistant to general corrosion than electrolytic galvanisation. In this way, it is also possible to meet the regulatory requirements that envisage 50 years for a design life of the cask, which can be extended by a further 50 years in the event of scheduled maintenance intervention, e.g. for the replacement of components (gaskets, bolts, etc.) with incipient corrosion.

The closing screws 5 are recessed, in use, in a respective hole 26 formed in the lid 4 so that they do not project axially out of hole 26. In particular, the head 28 of each closing screw 5 is housed in the portion 27 of the hole 26 and abuts, optionally with interposition of a washer, onto the bottom surface 29 of the portion 27.

Advantageously, the closing screws 5 are tightened in use with a load higher than the minimum nominal load required to make contact between the flanges 11, 22, i.e. to obtain complete deformation of the gaskets 36 and bring the sealing surfaces 12, 23 in contact with each other (so-called metal-to-metal contact as indicated by the manufacturer). This margin on the tightening load has two indirect beneficial effects on the gaskets 36.

Firstly, there is an increase in the friction force between the sealing surfaces 12, 23 of the flanges 11, 22: in the event of a transverse shock, more energy is required for the relative sliding to occur between the flanges 11, 22 and thus the relative "creeping" between the gaskets 36 and the respective sealing surfaces 12, 23.

Secondly, by increasing the tightening load, in the event of breakage of one or more closing screws 5 (again due to accidental falls of the cask 1), the other remaining closing screws 5 more effectively compensate for the tightening "amount" that is lacking: experimental and analytical tests carried out on prototypes and FEM models of the cask 1 have demonstrated to maintain sealing performance even after the breakage of several contiguous closing screws (a situation simulating an accidental shock event).

The body 2 and the lid 4 are in contact by means of the respective conical coupling surfaces 15, 25 and the respective sealing surfaces 12, 23, which tighten the gaskets 36 together.

On the other hand, the radially outer portions 13, 24 of the flanges 11, 22 remain axially spaced from each other by a gap 38 defined by the step 14. The gap 38 allow the preservation of the integrity of the closing screws 5 (and thus of the performance of the gaskets 36 they tighten) in the event of a fire, because it keeps the differential thermal expansions and the resulting tension and deformation states under control.

Advantageously, the conical coupling surfaces 15, 25 are coupled to each other with a play less than the play existing between each closing screw 5 and the respective through hole 26 formed in the lid 4.

In this way, in the event of a transverse shock on the cask 1, the energy of the impact is absorbed by the conical coupling between the coupling surfaces 15, 25 preventing direct and impulsive contact between the lid 4 and the closing screws 5 and thus avoiding the potential shear failure of the closing screws 5 and the consequent localised loss of the tightening load on the gaskets 36. In essence, the coupling surfaces 15, 25 of the body 2 and of the lid 4 fulfil the function of preventing the transverse sliding of the body 2 with respect to the lid 4, as well as the function of acting as a lead-in and centring while mounting the lid 4; in addition, the coupling surfaces 15, 25 increase the shielding of the cask 1 (with a zig-zag effect on radiations). The coupling surfaces 15, 25 instead are not supposed to have a sealing function: in fact, the gaskets 36 of the primary sealing system 6 both work axially and are not affected by any transverse shock.

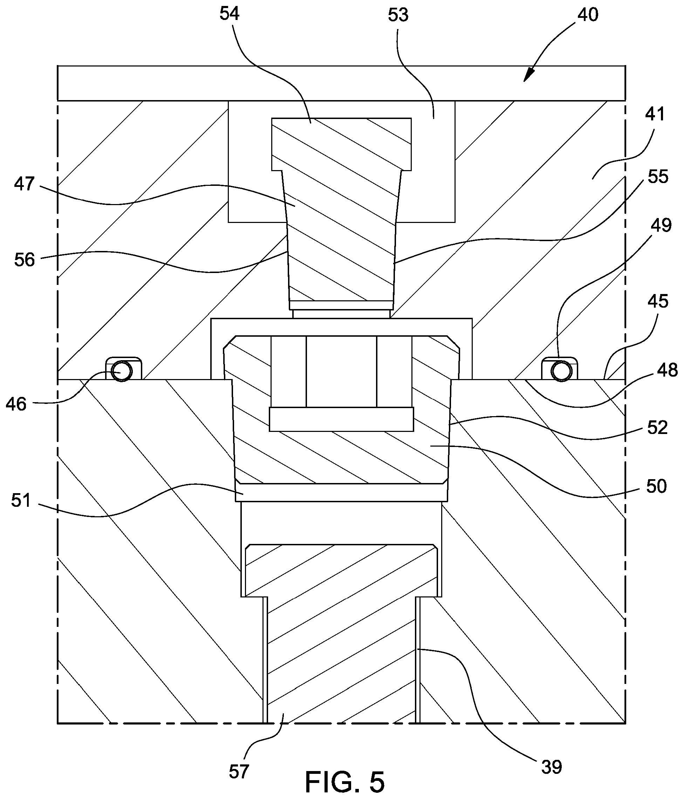

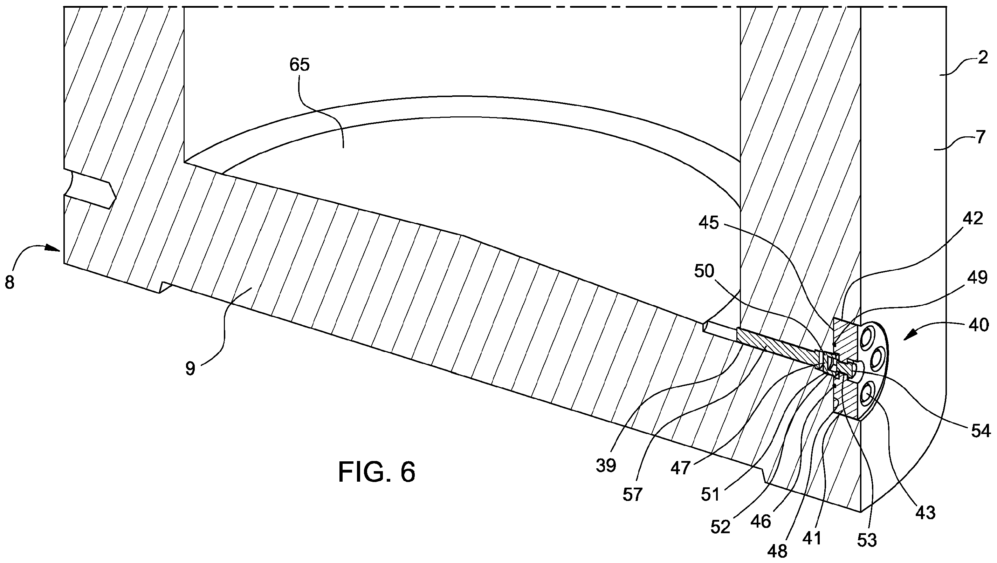

The cask 1 also comprises one or more auxiliary openings 39 formed passing-through in the body 2 and in the lid 4 for draining, venting and the internal pressure and leakage checks during operation; for example, auxiliary openings 39 are located in the middle of the lid 4 (Figures 3 and 5) and in the side wall 7 of the body 2 at the lower end 8 (Figure 6).

Each auxiliary opening 39 is provided with a double-gasket closing and sealing device 40.

Each device 40 comprises a blind flange 41 housed in a seat 42 aligned with the auxiliary opening 39; the blind flange 41 is fixed to the seat 42 by fixing screws 43 which engage respective threaded holes 44 formed on a bottom surface 45 of the seat 42 around the auxiliary opening 39.

The device 40 also comprises a first auxiliary gasket 46 and a second auxiliary gasket 47 in series interposed between the blind flange 41 and the seat 42.

The first auxiliary gasket 46 is defined by a metal sealing ring, for example an energized C-Ring, placed around the auxiliary opening 39 and interposed between a sealing surface 48 of the blind flange 41 and the bottom surface 45 of the seat 42, facing each other; for example, the auxiliary gasket 46 is housed in an annular groove 49 formed on the sealing surface 48 of the blind flange 41 and projecting from the groove 49.

The second auxiliary gasket 47 is defined by a conical thread cap 50, specifically an NPT cap, which engages a corresponding conical threaded seat 51 formed in the auxiliary opening 39; the cap 50 has a thread 52 provided with a covering layer of solid lubricant and anti-seize paste which is interposed between the thread 52 of the cap 50 and the conical threaded seat 51 and acts as a gas-tight sealing material.

The solid lubricant and anti-seize paste is in particular the same as the one used for the closing screws 5 and in general for all the threaded connections on the cask 1.

Essentially, a product normally used in a lubricant and anti-seize function on threaded parts is used for a sealing function.

For example, the commercial product Molykote P-37 (Dow Corning) was used, which is a composition of mineral oils and solid lubricants, containing in particular zirconium oxide, mineral oils, graphite, calcium hydroxide, with an operating temperature of over 800°C. It is understood that other similar lubricant and anti-seize pastes can be used, even with different components.

The combination of the conical thread cap 50 with the solid lubricant and anti-seize paste applied to its thread 52 guarantees sealing performance at the same level as a metal C-Ring, as demonstrated in experimental tests.

Advantageously, in order to allow inspection in use of the so-called "control volume", i.e. the interspace defined between the auxiliary gaskets 46, 47 in series, the blind flange 41 has an inspection opening 53 formed through the blind flange 41 and aligned with the auxiliary opening 39; the inspection opening 53 is closed by an inspection cap 54 which is also a conical thread cap (NPT cap) having a thread 55 provided with a covering layer of solid lubricant and anti-seize paste, screwed in a respective conical threaded seat 56 formed in the inspection opening 53; also in this case, the covering layer of solid lubricant and anti-seize paste is interposed between the thread 55 of the inspection cap 54 and the conical threaded seat 56 and acts as a gas-tight sealing material.

Optionally, a shielding pin 57 (having essentially the function of radiation containment) is placed inside the auxiliary opening 39, further inwards the opening 39 of the inspection cap 54.

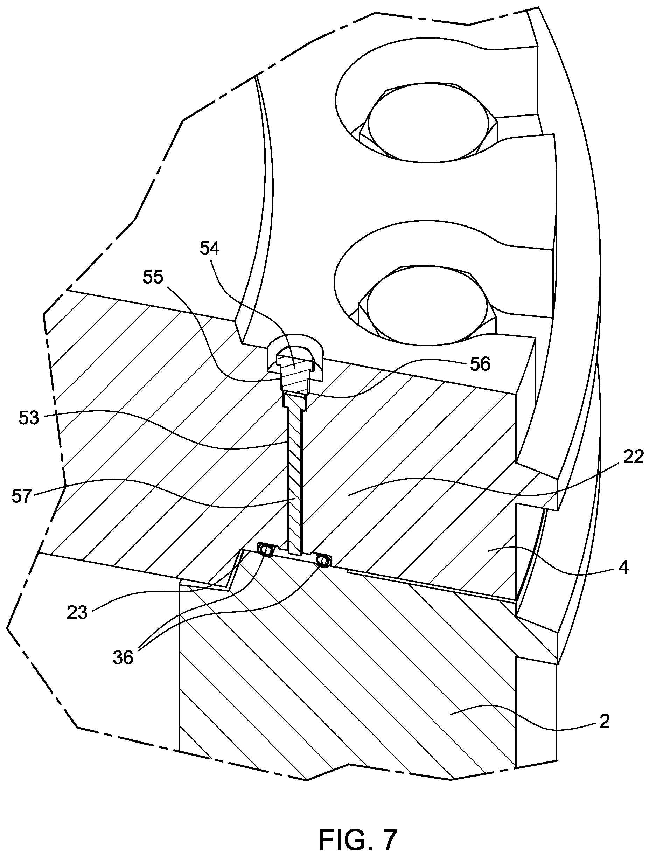

Similarly, as shown in Figure 7, the control volume defined between the gaskets 36 of the primary sealing system 6 is also accessible for inspections through one or more inspection openings 53, formed through the flange 22 of the lid 4. In the example shown, there are two diametrically opposed inspection openings 53 on the lid 4. Each inspection opening 53 extends through the lid 4 as far as the sealing surface 23 where it is placed between the two gaskets 36. Each inspection opening 53 is also closed by an inspection cap 54 which is also a conical thread cap (NPT cap) having a thread 55 provided with a covering layer of solid lubricant and anti-seize paste, screwed in a respective conical threaded seat 56 formed in the inspection opening 53; also in this case, the covering layer of solid lubricant and anti-seize paste is interposed between the thread 55 of the inspection cap 54 and the conical threaded seat 56 and acts as a gas-tight sealing material.

Preferably, a shielding pin 57 having radiation containment function is placed inside the inspection opening 53, further inwards in the inspection opening 53 than the inspection cap 54.

Advantageously, the fixing screws 43 of the blind flanges 41 are also hexagonal head screws, for example (but not necessarily) made of galvanised steel, and are recessed in the respective blind flange 41. In this case, it is not possible to completely eliminate the formation of stagnations in the same way as for the closing screws 5 of the lid 4; however, the blind flanges 41 are normally mounted at least once drainage has been completed (and often after a drying phase), so the problem is less significant; in addition, the enlarged seat of the fixing screws 43 required to be able to access their hexagonal head with the socket spanner favours the decontamination of the surfaces enclosed therein.

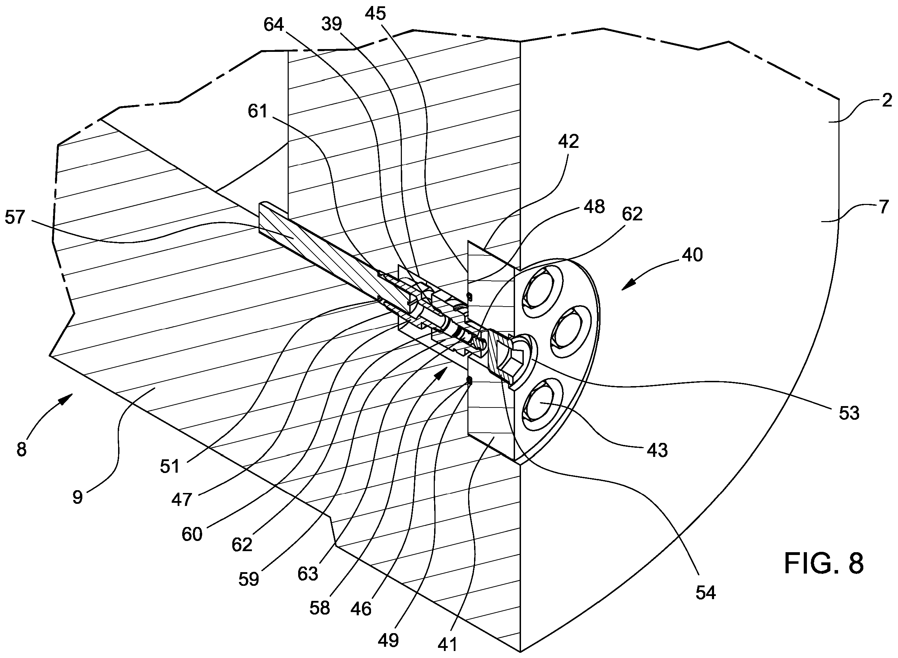

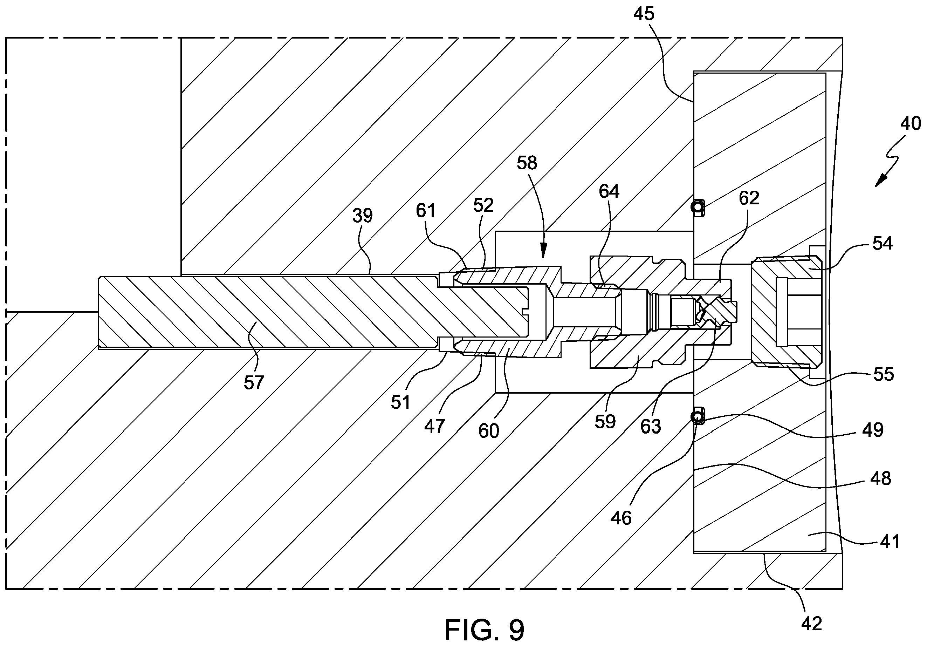

In the variant shown in Figures 8 and 9, the double-gasket closing and sealing device 40 of one or more of the auxiliary openings 39 (for example, as shown in Figure 8, the auxiliary opening 39 located on the body 2 at the lower end 8) is provided for connection to an external instrument, for example a manometer.

The device 40 still comprises a blind flange 41, housed in a seat 42 aligned with the auxiliary opening 39, and a first auxiliary gasket 46 and a second auxiliary gasket 47 in series interposed between the blind flange 41 and the seat 42.

Also in this case, the blind flange 41 is fixed to the housing 42 by fixing screws 43 that engage respective threaded holes formed on the bottom surface 45 of the seat 42 around the auxiliary opening 39.

The first auxiliary gasket 46 is still defined by a metal sealing ring, for example an energized C-Ring, placed around the auxiliary opening 39 and interposed between the blind flange 41 and the bottom surface 45 of the seat 42; for example, the auxiliary gasket 46 is housed in an annular groove 49, formed on a sealing surface 48 of the blind flange 41 facing the bottom surface 45, and projects from the groove 49.

In this case, the cap 50 described above is replaced by a connection element 58 comprising a quick coupling joint 59 and, if necessary, an adapter nipple 60; the connection element 58 has a first threaded end 61 (for example, on the nipple 60 if present) engaging a corresponding conical threaded seat 51 formed in the auxiliary opening 39 by means of a thread 52 with conical thread, in particular with an NPT thread; and a second end 62 (in particular, on the joint 59) provided with a quick coupling seat 63 shaped to receive an external instrument, for example a manometer. Appropriately, the quick coupling seat 63 is provided with metal inner sealing elements (cooperating in use with the instrument being coupled to the joint 59). It is understood that joint 59 may be directly screwed in the conical threaded seat 51 with no need for the adapter nipple 60: in other words, the connection element 58 may consist of the joint 59 alone, or, like in the example shown, of an assembly formed by the joint 59 and by the nipple 60: in this case, the joint 59 is joined to the nipple 60, for example, by means of a conical threaded connection 64.

Also in this case, a shielding pin 57 (having essentially the function of radiation containment) is advantageously placed inside the auxiliary opening 39, further inwards in the opening 39 of the connection element 58.

Similarly to what has been described above, the thread 52 of the connection element 58 and, if present the nipple 60, also the threaded connection 64, are provided with covering layers of solid lubricant and anti-seize paste that also acts as a gas-tight sealing material.

Also in this case, the blind flange 41 has an inspection opening 53, formed through the blind flange 41 and aligned with the auxiliary opening 39 and closed by a conical thread inspection cap 54 (NPT cap) having a thread provided with a covering layer of solid lubricant and anti-seize paste, screwed in a respective conical threaded seat formed in the inspection opening 53 with also the function of gas-tight sealing material. Clearly, the inspection cap 54 can take on different shapes and sizes: for example, while in the embodiment described above with reference to Figures 5-6 the inspection cap 54 is a hexagonal head cap, in the variant shown in Figures 8-9 the inspection cap 54 is a hexagonal recessed cap (i.e. having an inner hexagonal seat for being screwed/unscrewed).

Advantageously, various surfaces of the cask 1 are inclined with respect to the axis A so as to favour the drainage of the cask 1 after loading under water head; for example, as described above, the outflow surface 16 adjacent to the coupling surfaces 15, 25, and the outflow surfaces 20, 33 of the beads 19, 32 are inclined. In addition, the bottom wall 9 of the body 2 has an outflow surface 65 inclined downwards and towards the side wall 7, so as to convey the liquids towards the auxiliary opening 39 placed at the bottom of the body 2.

Optionally, in order to avoid the risk of stagnation and contamination, any gaps present on the cask 1, such as the gap 38 between the flanges 11, 22 and the volume determined by the play existing between the blind flanges 41 and the respective seats 42 on the body 2 and on the lid 4, can be filled with a sealing filler material (without structural functions), e.g. with neoprene strips, expanded graphite, etc. As these areas are sufficiently shielded from the content of the cask 1, it is not necessary for the sealing filler material to have special characteristics of resistance/integrity to ionising radiations.

Clearly, the choice of the materials with which to make the cask 1 and its various components must take into account the specific intended use. For example, all bolts are made of galvanised carbon steel (hot-dip galvanised or by electrolysis) in order to prevent the occurrence of galvanic corrosion if materials with different potential are used. If the storage environment were aggressive, the galvanisation might also suffer in the long run (especially for the elements exposed to the outside environment), and in such a case the bolts can be made of stainless steel.

The surfaces of the cask 1 can be painted as is usual in the industry. Preferably, the surfaces of the body 2 and of the lid 4 that are in mutual contact after closing and tightening the lid 4 are not painted. Thus, the sealing surface 12 of the body 2 and the sealing surface 23 of the lid 4 are only partially painted, i.e. only outside the contact area between the flanges 11, 24, while their respective portions facing the gap 38 are not painted. Similarly, for each blind flange 41, the bottom surface 45 of the seat 42 and the corresponding sealing surface 48 of the blind flange 41, in contact with each other, are not painted.

It must be also understood that further changes and variants can be made to the process described and shown herein that do not depart from the scope of the enclosed claims.

## Claims

1. A cask (1) for conditioning, storage and disposal of radioactive waste, in particular solid radioactive waste of medium activity, comprising: a main hollow body (2) extending along and about a longitudinal axis (A) and provided with an access opening (3); a lid (4) closing the opening (3) and fixed to the body (2) by closing screws (5) which tighten respective flanges (11, 22) of the body (2) and the lid (4) against each other and are inserted in respective through holes (17) formed in the lid (4) and in respective threaded blind holes (26) formed in the body (2); and a primary sealing system (6) arranged between the body (2) and the lid (4) and comprising two gaskets (36) in series; wherein the body (2) and the lid (4) are provided with respective conical coupling surfaces (15, 25) adjacent to said respective flanges (11, 22) and in contact with each other and coupled to each other with a play less than the play existing between each closing screw (5) and the respective hole (17) formed in the lid (4); and in that said gaskets (36) in series of the primary sealing system (6) are axial gaskets acting parallel to the axis (A) between respective sealing surfaces (12, 23), parallel to one another and perpendicular to the axis (A), of said flanges (11, 22) of the body (2) and the lid (4); said flanges (11, 22) being in contact with each other by means of said respective sealing surfaces (12, 23), and comprising respective radially outer portions (13, 24) axially spaced apart from each other by a gap (38), said portions (13, 24) being provided with said through holes (17) of the lid (4) and said threaded blind holes (26) of the body (2) which receive the closing screws (5).

2. The cask according to claim 1, wherein the closing screws (5) are tightened in use with a load higher than the minimum nominal load required to make contact between the flanges (11, 22), i.e. to obtain complete deformation of the gaskets (36) and bring the sealing surfaces (12, 23) in contact with each other.

3. The cask according to claim 1 or 2, wherein each closing screw (5) is recessed in use in the respective hole (17) formed in the lid (4) and has a head (28) which is housed in an upper enlarged portion (27) of the hole (17) and abuts onto a bottom surface (29) of said enlarged portion (27); said enlarged portion (27) being provided with a radial opening (31) facing toward a radially outer peripheral edge of the lid (4) and flush with the bottom surface (29).

4. The cask according to one of the preceding claims, wherein the closing screws (5) are hexagonal head screws.

5. The cask according to one of the preceding claims, having one or more auxiliary openings (39) formed in the lid (4) and/or in the body (2) and provided with respective double-gasket closing and sealing devices (40); each closing and sealing device (40) comprising a blind flange (41), fixed by fastening screws (43) in a seat (42) aligned to the auxiliary opening (39); and a first auxiliary gasket (46) and a second auxiliary gasket (47) in series; the first auxiliary gasket (46) being a metal sealing ring, for example an energized C-Ring; and the second auxiliary gasket (47) being at least one thread (52) which engages a respective conical threaded seat (51) formed in the auxiliary opening (39) and is provided with a covering layer of solid lubricant and anti-seize paste interposed between the thread (52) and the respective conical threaded seat (51) and also acts as a gas-tight sealing material.

6. The cask according to claim 5, wherein the closing and sealing device (40) comprises a conical thread cap (50) provided with said thread (52) and screwed in the conical threaded seat (51) to close the auxiliary opening (39).

7. The cask according to claim 5, wherein the closing and sealing device (40) comprises a connection element (58) having a first threaded end (61) engaging the conical threaded seat (51) by means of said thread (52); and a second end (62) provided with a quick coupling seat (63) shaped to receive an external instrument, for example a manometer.

8. The cask according to claim 7, wherein the connection element (58) consists of a quick coupling joint (59), screwed in the conical threaded seat (51) by means of the thread (52) and provided with the quick coupling seat (63); or of an assembly formed by a quick coupling joint (59), provided with the quick coupling seat (63), and by an adapter nipple (60), provided with the thread (52) and screwed in the conical threaded seat (51) and joined to the quick coupling joint (59) by a threaded coupling (64).

9. The cask according to one of claims 5 to 8, wherein the blind flange (41) has an inspection opening (53), formed through the blind flange (41) and aligned with the auxiliary opening (39); the inspection opening (53) being closed by an inspection cap (54) which is also a conical threaded cap screwed in a respective conical threaded seat (56) formed in the inspection opening (53) and having a thread (55) provided with a covering layer of solid lubricant and anti-seize paste interposed between the thread (55) of the inspection cap (54) and the respective conical threaded seat (56) and also acts as a gas-tight sealing material.

10. The cask according to one of claims 5 to 9, wherein said solid lubricant and anti-seize paste is a composition of mineral oils and solid lubricants.

11. The cask according to one of the preceding claims, wherein the gaskets (36) consist of respective metal sealing rings, for example energized metal C-Ring.

## Patentansprüche

1. Behälter (1) zur Konditionierung, Lagerung und Entsorgung von radioaktiven Abfällen, insbesondere festen radioaktiven Abfällen mit mittlerer Aktivität, umfassend: einen hohlen Hauptkörper (2), der sich entlang einer und um eine Längsachse (A) erstreckt und mit einer Zugangsöffnung (3) versehen ist; einen Deckel (4), der die Öffnung (3) verschließt und durch Verschlussschrauben (5), die jeweilige Flansche (11, 22) des Körpers (2) und des Deckels (4) gegeneinander festziehen und in jeweilige Durchgangslöcher (17), die in dem Deckel (4) ausgebildet sind, und in jeweilige Gewindesacklöcher (26), die in dem Körper (2) ausgebildet sind, eingesetzt sind, an dem Körper (2) befestigt ist; und ein Hauptdichtsystem (6), das zwischen dem Körper (2) und dem Deckel (4) angeordnet ist und zwei Dichtungen (36) in Reihe umfasst; wobei der Körper (2) und der Deckel (4) mit jeweiligen konischen Kopplungsoberflächen (15, 25) versehen sind, die den jeweiligen Flanschen (11, 22) benachbart sind und miteinander in Kontakt stehen und mit einem Spiel aneinander gekoppelt sind, das kleiner als das Spiel ist, das zwischen jeder Verschließschraube (5) und dem jeweiligen Loch (17) vorhanden ist, das in dem Deckel (4) ausgebildet ist; und dadurch, dass die Dichtungen (36) in Reihe des Hauptdichtsystems (6) axiale Dichtungen sind, die parallel zur Achse (A) zwischen jeweiligen Dichtoberflächen (12, 23) parallel zueinander und senkrecht zur Achse (A) der Flansche (11, 22) des Körpers (2) und des Deckels (4) wirken; wobei die Flansche (11, 22) mittels der jeweiligen Dichtoberflächen (12, 23) miteinander in Kontakt stehen und jeweilige radial äußere Abschnitte (13, 24) umfassen, die um einen Spalt (38) axial voneinander beabstandet sind, wobei die Abschnitte (13, 24) mit den Durchgangslöchern (17) des Deckels (4) und den Gewindesacklöchern (26) des Körpers (2) versehen sind, welche die Verschließschrauben (5) aufnehmen.

2. Behälter nach Anspruch 1, wobei die Verschließschrauben (5) bei der Verwendung mit einer Last festgezogen werden, die höher als die Mindestnennlast ist, die erforderlich ist, um Kontakt zwischen den Flanschen (11, 22) herzustellen, d. h. um eine vollständige Verformung der Dichtungen (36) zu erhalten und die Dichtoberflächen (12, 23) miteinander in Kontakt zu bringen.

3. Behälter nach Anspruch 1 oder 2, wobei jede Verschließschraube (5) bei der Verwendung in dem jeweiligen Loch (17) vertieft ist, das in dem Deckel (4) ausgebildet ist, und einen Kopf (28) aufweist, der in einem oberen vergrößerten Abschnitt (27) des Lochs (17) aufgenommen ist und an eine untere Oberfläche (29) des vergrößerten Abschnitts (27) stößt; wobei der vergrößerte Abschnitt (27) mit einer radialen Öffnung (31) versehen ist, die einem radial äußeren umlaufenden Rand des Deckels (4) zugewandt ist und mit der unteren Oberfläche (29) bündig ist.

4. Behälter nach einem der vorhergehenden Ansprüche, wobei die Schließschrauben (5) Sechskant-Kopfschrauben sind.

5. Behälter nach einem der vorhergehenden Ansprüche, der eine oder mehrere Hilfsöffnungen (39) aufweist, die in dem Deckel (4) und/oder in dem Körper (2) ausgebildet sind und mit jeweiligen Doppeldichtungs-Schließ- und Dichtvorrichtungen (40) versehen sind; wobei jede Schließ- und Dichtvorrichtung (40) einen Blindflansch (41), der durch Befestigungsschrauben (43) in einem Sitz (42) befestigt ist, der mit der Hilfsöffnung (39) fluchtet; und eine erste Hilfsdichtung (46) und eine zweite Hilfsdichtung (47) in Reihe umfasst; wobei die erste Hilfsdichtung (46) ein Metalldichtring ist, zum Beispiel ein unterstützter C-Ring; und die zweite Hilfsdichtung (47) mindestens ein Gewinde (52) ist, das mit einem jeweiligen konischen Gewindesitz (51) ineinandergreift, der in der Hilfsöffnung (39) ausgebildet ist und mit einer Deckschicht aus Festschmierstoff und Anti-Seize-Paste versehen ist, die zwischen dem Gewinde (52) und dem jeweiligen konischen Gewindesitz (51) eingefügt ist und auch als ein gasdichtes Dichtmaterial wirkt.

6. Behälter nach Anspruch 5, wobei die Schließ- und Dichtvorrichtung (40) eine konische Gewindekappe (50) umfasst, die mit dem Gewinde (52) versehen ist und in den konischen Gewindesitz (51) geschraubt ist, um die Hilfsöffnung (39) zu schließen.

7. Behälter nach Anspruch 5, wobei die Schließ- und Dichtvorrichtung (40) ein Verbindungselement (58), das ein erstes Gewindeende (61), das mittels des Gewindes (52) in den konische Gewindesitz (51) eingreift; und ein zweites Ende (62) aufweist, das mit einem Schnellkopplungssitz (63) versehen ist, der geformt ist, um ein externes Instrument, zum Beispiel ein Manometer, aufzunehmen.

8. Behälter nach Anspruch 7, wobei das Verbindungselement (58) aus einer Schnellkopplungsverbindung (59), die mittels des Gewindes (52) in den konischen Gewindesitz (51) geschraubt ist und mit dem Schnellkopplungssitz (63) versehen ist; oder aus einer Anordnung besteht, die von einer Schnellkopplungsverbindung (59), die mit dem Schnellkopplungssitz (63) versehen ist, und von einem Adapternippel (60) ausgebildet ist, der mit dem Gewinde (52) versehen ist und in den konischen Gewindesitz (51) geschraubt und durch eine Gewindekopplung (64) mit der Schnellkopplungsverbindung (59) verbunden ist.

9. Behälter nach einem der Ansprüche 5 bis 8, wobei der Blindflansch (41) eine Inspektionsöffnung (53) aufweist, die durch den Blindflansch (41) ausgebildet ist und mit der Hilfsöffnung (39) fluchtet; wobei die Inspektionsöffnung (53) durch eine Inspektionskappe (54) geschlossen ist, die auch eine konische Gewindekappe ist, die in einem jeweiligen konischen Gewindesitz (56) geschraubt ist, der in der Inspektionsöffnung (53) ausgebildet ist, und ein Gewinde (55) aufweist, das mit einer Deckschicht aus Festschmierstoff und Anti-Seize-Paste versehen ist, die zwischen dem Gewinde (55) der Inspektionskappe (54) und dem jeweiligen konischen Gewindesitz (56) eingefügt ist und auch als ein gasdichtes Dichtmaterial wirkt.

10. Behälter nach einem der Ansprüche 5 bis 9, wobei der Festschmierstoff und die Anti-Seize-Paste eine Zusammensetzung aus Mineralölen und Festschmierstoffen sind.

11. Behälter nach einem der vorhergehenden Ansprüche, wobei die Dichtungen (36) aus jeweiligen Metalldichtringen, zum Beispiel unterstützten Metall-C-Ringen, bestehen.

## Revendications

1. Château de transport (1) pour le conditionnement, le stockage et l'élimination des déchets radioactifs, en particulier des déchets radioactifs solides d'activité moyenne, comprenant : un corps principal creux (2) s'étendant le long et autour d'un axe longitudinal (A) et prévu avec une ouverture d'accès (3) ; un couvercle (4) fermant l'ouverture (3) et fixé au corps (2) par le biais de vis de fermeture (5) qui serrent l'une contre l'autre les brides (11, 22) respectives du corps (2) et du couvercle (4) et sont insérées dans des trous débouchants (17) respectifs formés dans le couvercle (4) et dans des trous borgnes filetés (26) respectifs formés dans le corps (2) ; et un système d'étanchéité primaire (6) agencé entre le corps (2) et le couvercle (4) et comprenant deux joints (36) en série ; dans lequel le corps (2) et le couvercle (4) sont prévus avec des surfaces de couplage coniques (15, 25) respectives adjacentes auxdites brides (11, 22) respectives et en contact entre elles et couplées entre elles avec un jeu inférieur au jeu existant entre chaque vis de fermeture (5) et le trou (17) respectif formé dans le couvercle (4) ; et en ce que lesdits joints (36) en série du système d'étanchéité primaire (6) sont des joints axiaux agissant parallèlement à l'axe (A) entre des surfaces d'étanchéité (12, 33) respectives, parallèles entre elles et perpendiculaires à l'axe (A) desdites brides (11, 22) du corps (2) et du couvercle (4) ; lesdites brides (11, 22) étant en contact entre elles au moyen desdites surfaces d'étanchéité (12, 23) respectives et comprenant des parties radialement externes (13, 24) respectives axialement espacées l'une de l'autre par un interstice (38), lesdites parties (13, 24) étant prévues avec lesdits trous débouchants (17) du couvercle (4) et lesdits trous borgnes filetés (26) du corps (2) qui reçoivent les vis de fermeture (5).

2. Château de transport selon la revendication 1, dans lequel les vis de fermeture (5) sont serrées à l'usage avec une charge supérieure à la charge nominale minimum requise pour établir le contact entre les brides (11, 22), c'est-à-dire pour obtenir la déformation complète des joints (36) et amener les surfaces d'étanchéité (12, 23) en contact entre elles.

3. Château de transport selon la revendication 1 ou 2, dans lequel chaque vis de fermeture (5) est encastrée, à l'usage, dans le trou (17) respectif formé dans le couvercle (4) et a une tête (28) qui est logée dans une partie supérieure agrandie (27) du trou (17) et vient en butée sur une surface inférieure (29) de ladite partie agrandie (27) ; ladite partie agrandie (27) étant prévue avec une ouverture radiale (31) orientée vers un bord périphérique radialement externe du couvercle (4) et à fleur avec la surface inférieure (29).

4. Château de transport selon l'une des revendications précédentes, dans lequel les vis de fermeture (5) sont des vis à tête hexagonale.

5. Château de transport selon l'une des revendications précédentes, ayant une ou plusieurs ouvertures auxiliaires (39) formées dans le couvercle (4) et/ou dans le corps (2) et prévues avec des dispositifs de fermeture et d'étanchéité à double joint (40) respectifs ; chaque dispositif de fermeture et d'étanchéité (40) comprenant une bride aveugle (41) fixée par le biais de vis de fixation (43) dans un siège (42) aligné avec l'ouverture auxiliaire (39) ; et un premier joint auxiliaire (46) et un deuxième joint auxiliaire (47) en série ; le premier joint auxiliaire (46) étant une bague d'étanchéité métallique, par exemple, une bague en C excitée ; et le deuxième joint auxiliaire (47) étant au moins un filetage (52) qui met en prise un siège fileté conique (51) formé dans l'ouverture auxiliaire (39) et est prévu avec une couche de recouvrement de pâte solide lubrifiante et antigrippage intercalée entre le filetage (52) et le siège fileté conique (51) respectif et sert également de matériau d'étanchéité étanche au gaz.

6. Château de transport selon la revendication 5, dans lequel le dispositif de fermeture et d'étanchéité (40) comprend un capuchon à filetage conique (50) prévu avec ledit filetage (52) et vissé dans le siège fileté conique (51) pour fermer l'ouverture auxiliaire (39).

7. Château de transport selon la revendication 5, dans lequel le dispositif de fermeture et d'étanchéité (40) comprend un élément de raccordement (58) ayant une première extrémité filetée (61) mettant en prise le siège fileté conique (51) au moyen dudit filetage (52) ; et une deuxième extrémité (62) prévue avec un siège à couplage rapide (63) formé pour recevoir un instrument externe, par exemple, un manomètre.

8. Château de transport selon la revendication 7, dans lequel l'élément de raccordement (58) consiste en un joint à couplage rapide (59), vissé dans le siège fileté conique (51) au moyen du filetage (52) et prévu avec le siège à couplage rapide (63) ; ou en un ensemble formé par un joint à couplage rapide (59), prévu avec le siège à couplage rapide (63), et par un mamelon adaptateur (60) prévu avec le filetage (52) et vissé dans le siège fileté conique (51) et assemblé au joint à couplage rapide (59) par un couplage fileté (64).

9. Château de transport selon l'une des revendications 5 à 8, dans lequel la bride aveugle (41) a une ouverture d'inspection (53) formée à travers la bride aveugle (41) et alignée avec l'ouverture auxiliaire (39) ; l'ouverture d'inspection (53) étant fermée par un capuchon d'inspection (54) qui est également un capuchon fileté conique vissé dans un siège fileté conique (56) respectif formé dans l'ouverture d'inspection (53) et ayant un filetage (55) prévu avec une couche de recouvrement de pâte solide lubrifiante et antigrippage intercalée entre le filetage (55) du capuchon d'inspection (54) et le siège fileté conique (56) respectif et sert également de matériau d'étanchéité étanche au gaz.

10. Château de transport selon l'une des revendications 5 à 9, dans lequel ladite pâte solide lubrifiante et antigrippage est une composition d'huiles minérales et de lubrifiants solides.

11. Château de transport selon l'une des revendications précédentes, dans lequel les joints (36) consistent en des bagues d'étanchéité métalliques respectives, par exemple une bague en C métallique excitée.
